# EUROPÄISCHE PATENTSCHRIFT

(11) **EP 1 964 332 B1**
(45) Veröffentlichungstag und Bekanntmachung des Hinweises auf die Patenterteilung: **25.09.2013**
(21) Anmeldenummer: 06830725.5
(22) Anmeldetag: 19.12.2006
(51) Int. Cl.: H04L 12/28, H04B 7/26

(54) **VERFAHREN ZUM ÜBERTRAGEN VON TEILNEHMERSPEZIFISCHEN DATEN**
METHOD FOR TRANSMITTING SUBSCRIBER-SPECIFIC DATA
PROCEDE DE TRANSMISSION DE DONNEES SPECIFIQUES A L'ABONNE

(30) Priorität: 19.12.2005 EP 05027784
(43) Veröffentlichungstag der Anmeldung: 03.09.2008
(73) Patentinhaber: Gigaset Communications GmbH, 81379 München (DE)
(72) Erfinder: KLEINDL, Günter, A-3370 Ybbs/Donau (AT); LENFORT, Christoph, 46399 Bocholt (DE); VAN DE LOGT, Marco, 47574 Goch (DE); MÜLLER, Andreas, 46459 Rees (DE); HÜLDER, Stefan, 46286 Dorsten-Deuten (DE); KAMPERSCHROER, Erich, 46499 Hamminkeln (DE); KEHREN, Dieter, 46539 Dinslaken (DE)
(74) Vertreter: Michalski Hüttermann & Partner Patentanwälte
(86) Internationale Anmeldenummer: PCT/EP2006/069946
(87) Internationale Veröffentlichungsnummer: WO 2007/071694

(56) Entgegenhaltungen:
- EP-A- 0 827 295
- EP-A- 0 935 353
- EP-A2- 0 399 612
- GB-A- 2 321 160
- KOBAYASHI Y ET AL: "ASYMMETRIC RADIO RESOURCE ASSIGNMENT SCHEME FOR CONNECTION-LESS SERVICES IN CDMA/SHARED-TDD CELLULAR PACKET COMMUNICATIONS" IEICE TRANSACTIONS ON FUNDAMENTALS OF ELECTRONICS, COMMUNICATIONS AND COMPUTER SCIENCES, ENGINEERING SCIENCES SOCIETY, TOKYO, JP, Bd. E88-A, Nr. 7, Juli 2005 (2005-07), Seiten 1903-1911, XP001231969 ISSN: 0916-8508

## Beschreibung

Die Erfindung bezieht sich auf ein Verfahren zum Übertragen von teilnehmerspezifischen Daten über ein Übertragungsmedium gemäß einem auf Zeitschlitzübertragung mit Zeitlagentrennung beruhendem Übertragungsprinzip gemäß dem Oberbegriff des Patentanspruches 1, der insbesondere in TDMA/TDD-basierten (Time Division Multiple Access/Time Division Duplex) Telekommunikationssystemen ihre Anwendung findet.

Ein TDMA-basiertes Telekommunikationssystem ist aus GB 2 321 160 A bekannt. Die Kommunikation zwischen der Basisstation und der Mobilstation findet dabei über zwei getrennte Frequenzbänder statt, wobei die Datenübertragung sowohl von der Mobilstation als auch von der Basisstation initiiert werden kann. Dabei schaltet die Mobilstation mit einem der zugeordneten Datenbenutzerkanäle in der Abwärtsstrecke gleich und führt mittels des korrespondierenden Uplink-Schlitzes eine Abfrage zur Datenkommunikation durch. Teil der Abfrage ist es außerdem, ob ein schneller oder langsamer Datenkanal verwendet und ob eine Vollduplexkommunikation unterstützt wird.

In einem DECT-basierten (Digital Enhanced Cordless Telecommunication) Telekommunikationssystem werden teilnehmerspezifische Daten über eine DECT-Luftschnittstelle übertragen. Diese Übertragung erfolgt gemäß dem DECT-Standard (ETSI EN 300 175-1...8, V1.9.1, 09/2005) in Zeitschlitzen mit Zeitlagentrennung - mit anderen Worten nach dem TDMA- und TDD-Übertragungsprinzip. Gemäß dem DECT-Standard können die Zeitschlitzen darüber hinaus noch unterschiedliche Formate haben (unterschiedliche Typen von zeitschlitzen). So gibt es "Half Slot"-Zeitschlitze mit je einem Nutzdatenfeld von 80 Bit, "Fall Slot"-Zeitschlitze mit je einem Nutzdatenfeld von 320 Bit oder "Double Slot"-Zeitschlitze mit je einem Nutzdatenfeld von 800 Bit.

Darüber hinaus ist es bei der Übertragung von teilnehmerspezifischen Daten über die DECT-Luftschnittstelle unter Umständen auch wünschenswert statt der gemäß dem DECT-Standard bislang üblichen ADPCM-basierten (Adaptive Differential Pulse Code Modulation) Schmalband-Sprachübertragung mit einer Nutzdatenrate von 32 kbps (kbit per second) nach dem "ITU-T G.726"-Standard nunmehr eine "SB-ADPCM"-basierten (Sub-Band Adaptive Differential Pulse Code Modulation) Breitband-Sprachübertragung mit einer Nutzdatenrate von 64 kbps nach dem "ITU-T G.722"-Standard zu verwenden und dabei die Anzahl der über die DECT-Luftschnittstelle von einer DECT-Basissta tion simultan steuerbaren Sprachverbindungen trotz der Erhöhung der Datenrate konstant zu halten.

Um eine "64 kbps"-Sprachdatenverbindung in dem DECT-System zwischen zwei DECT-Geräten aufzubauen, kann gemäß dem aktuellen DECT-Standard der vorstehend erwähnte "Double Slot"-Zeitschlitz benutzt werden. Bei Verwendung kostengünstiger "Slow-Hopping"-Funkteile für die jeweiligen DECT-Geräte waren dazu immer drei oder sogar vier (je nach Realisierung) DECT-Zeitschlitze erforderlich. Damit können aber auch nur noch vier bzw. drei simultane Verbindungen aufgebaut werden, was eine deutliche Einbuße gegenüber den maximal sechs Verbindungen bei der "32 kbps"-Sprachdatenverbindung bedeutet.

Alternativ dazu können auch mehrere "Full Slot"-Zeitschlitze kombiniert werden, was aber ebenfalls die Anzahl der simultanen Verbindungen reduziert. Unter Inkaufnahme höherer Kosten könnte das Problem auch mit Hilfe von "Fast-Hopping"-Funk-teilen anstelle der "Slow-Hopping"-Funkteile bzw. mit höherwertigen Modulationsverfahren gelöst werden.

Eine weitere Möglichkeit die "64 kbps"-Sprachdatenverbindung in dem DECT-System zu realisieren, basiert auf einem bekannten Vorschlag in Form eines "White Paper" der Firma Höft & Wessel auf der DECT-Konferenz, 11./12. Februar 2003. Der Vorschlag beinhaltete, den "Double Slot"-Zeitschlitz auf eine feste Länge zu verkürzen (so genannter "Long Slot"). Korrespondierend zu dem Verkürzungsvorschlag von Höft & Wessel lässt sich auch der "Full Slot"-Zeitschlitz auf eine feste Länge verkürzen (so genannter "Short Slot")

Bei der Übertragung von teilnehmerspezifischen Daten in einem DECT-basierten Telekommunikationssystem wird weiterhin ein fester Zeitrahmen verwendet, der in eine Anzahl von Zeitschlitzen unterteilt ist. Wenn nun in dem DECT-System das Ziel darin besteht, die Daten in einem Mischbetrieb simultan sowohl über symmetrische Verbindungen als auch asymmetrische Verbindungen zu übertragen, wobei bei einer symmetrischen Verbindung in Vorwärts- und Rückwärtsrichtung (Sende- und Empfangsrichtung) mit der gleichen Datenrate übertragen wird, während bei einer asymmetrischen Verbindung die Datenraten der beiden Übertragungsrichtungen unterschiedlich sind, so werden für die symmetrische Verbindung ein Zeitschlitzpaar und für die asymmetrische Verbindung eine unterschiedliche Anzahl von z.B. mindestens vier Zeitschlitzen des gleichen Typs für die beiden Übertragungsrichtungen verwendet.

Bei der symmetrischen Verbindung sind die Übertragungszeitpunkte für die beiden Übertragungsrichtungen genau um eine halbe Zeitrahmenlänge versetzt. Bei der asymmetrischen Verbindung werden von den vier Zeitschlitzen drei Zeitschlitze für die eine Richtung und ein Zeitschlitz für die Gegenrichtung belegt. Die Anzahl der Zeitschlitze ist immer gerade und die Zeitschlitze sind vorzugsweise paarweise um die halbe Zeitrahmenlänge versetzt im Zeitrahmen angeordnet, damit die asymmetrischen Verbindungen möglichst effizient mit symmetrischen Verbindungen kombiniert werden können.

WLAN-basierte (Wireless Local Area Network) Telekommunikationssysteme nach dem IEEE 802.11-Standard verwenden ein anderes Übertragungsprinzip, das jedoch wesentlich ineffizienter ist als das des DECT-Systems.

Die der Erfindung zugrunde liegende Aufgabe besteht darin, bei der Übertragung von teilnehmerspezifischen Daten über ein Übertragungsmedium gemäß einem auf Zeitschlitzübertragung mit Zeitlagentrennung beruhendem Übertragungsprinzip das von mehreren Teilnehmern nutzbare Übertragungsmedium auch dann effizient auszunutzen, wenn.bei mindestens einem das Übertragungsmedium nutzenden Teilnehmer die Datenraten der in Sende- und Empfangsrichtung übertragenden Daten unterschiedlich sind.

Diese Aufgabe wird ausgehend von dem in den Oberbegriffen des Patentanspruchs 1 definierten Verfahren durch die in dem jeweiligen Kennzeichen der Patentanspruchs 1 angegebenen Merkmale gelöst.

Die der Erfindung zugrunde liegende Idee besteht darin, teilnehmerspezifische in Sende- und Empfangsrichtung asymmetrisch verteilte Daten über ein Übertragungsmedium gemäß einem auf Zeitschlitzübertragung mit Zeitlagentrennung beruhendem Übertragungsprinzip für jeden Teilnehmer wie bei einer symmetrischen Verteilung der Daten in mindestens zwei Zeitschlitzen pro periodisch wiederkehrenden Zeitrahmen sowie entsprechend der asymmetrischen Verteilung durch das Verhältnis einer Anzahl von Sendedatenpaketen zu Empfangsdatenpaketen in einer Vielzahl "n" halber Zeitrahmen von Zeitrahmen mit "n ≥ 2 und n∈N" zu übertragen.

Durch diese Art, asymmetrisch verteilte Daten in Systemen mit einem auf Zeitschlitzübertragung mit Zeitlagentrennung beruhendem Übertragungsprinzip zu übertragen, wird gegenüber bisherigen Systemen eine effizientere Datenübertragung erzielt.

### Beispiel 1:

Wird in einem DECT-basierten Telekommunikationssystem [vgl.: (1) ETSI EN 300 175-1...8, V1.9.1, 09/2-005; (2) Buch aus dem Verlag B.G Teubner Stuttgart 1998 unter "Informationstechnik": B.Walke "Mobilfunknetze und ihre Protokolle", Band 2, Kapitel 5, Seiten 107 bis 216; insb. Kapitel 5.4.1.2] eine asymmetrische Übertragung mit vier "Full Slot"-Zeitschlitzen (3 "Full Slot"-Zeitschlitze in einer Richtung und 1 "Full Slot"-Zeitschlitz in Gegenrichtung) und binärer Modulation verwendet, dann ergibt sich eine gesamte Nutzdatenrate von 128 kBit/s (96 kBit/s + 32 kBit/s).

Wird demgegenüber das vorgeschlagene Verfahren gemäß Anspruch 1 mit n=2 eingesetzt, dann kann man beispielsweise gemäß Anspruch 2 zwei "Double Slot"-Zeitschlitze verwenden, da für den Rückkanal kein eigener "Slot" erforderlich ist. Damit erhöht sich bei gleicher prozentueller Belegung des Rahmens die gesamte Nutzdatenrate auf 160 kBit/s, was einer Steigerung der Datenrate um 25 % entspricht. Die Aufteilung der Datenrate auf die beiden Richtungen erfolgt durch das Tastverhältnis, z.B. 120 kbit/s + 40 kBit/s.

### Beispiel 2:

Wird in dem DECT-System aus Beispiel 1 nunmehr eine asymmetrische Übertragung mit vier "Half Slot"-Zeitschlitze (3 "Half Slot"-Zeitschlitze in einer Richtung und 1 "Half Slot"-Zeitschlitz in Gegenrichtung) und binärer Modulation verwendet, dann ergibt sich eine gesamte Nutzdatenrate von 32 kBit/s (24 kBit/s + 8 kBit/s).

Wird demgegenüber wieder das vorgeschlagene Verfahren gemäß Anspruch 1 mit n=2 eingesetzt, dann kann man beispielsweise gemäß Anspruch 2 zwei "Füll Slot"-Zeitschlitze verwenden, da für den Rückkanal kein eigener "Slot" erforderlich ist. Damit erhöht sich bei gleicher prozentueller Belegung des Rahmens die gesamte Nutzdatenrate auf 64 kBit/s, was einer Steigerung der Datenrate um 100 % entspricht. Die Aufteilung der Datenrate auf die beiden Richtungen erfolgt durch das Tastverhältnis, z.B. 48 kBit/s + 16 kBit/s.

### Weitere Vorteile:

Da bei dem vorgeschlagenen Verfahren auch bei asymmetrischen Verbindungen immer nur Zeitschlitzpaare verwendet werden, kann auch bei einem Mischbetrieb von asymmetrischen und symmetrischen Verbindungen das Übertragungsmedium optimal ausgenützt werden, ohne dass nicht nutzbare Zeitlücken entstehen.

Es besteht die Möglichkeit, aber nicht die Notwendigkeit, bei einer Verbindung immer den gleichen Zeitschlitztyp zu verwenden.

Das Verhältnis von Sendedatenrate und Empfangsdatenrate kann relativ flexibel eingestellt werden.

### Anmerkung:

Die Asymmetrie über mehrere Rahmen hinweg bedeutet für den Rückkanal mit einer niedrigen Datenrate in jedem Fall auch eine Vergrößerung der zeitlichen Verzögerung (Vergrößerung des Delays). Die Auswahl des Paketformats ("Half-, Full-, Double-Slot") und des Verhältnisses zwischen Hin- und Rückkanal (3:1, 5:1, 3:2 usw.) wird nicht nur durch die angeforderte Datenrate, sondern auch durch die maximal akzeptable Verzögerungszeit beeinflusst.

Um aber gemäß einer weiteren der Erfindung zugrunde liegenden Idee auch eine Möglichkeit zu schaffen, bei der die im Zuge der teilnehmerspezifischen Datenübertragung resultierende Datenrate weitaus flexibler als bisher eingestellt werden kann und weiterhin kostengünstige "Slow-Hopping"-Funkteile eingesetzt werden können, wird gemäß Anspruch 3 vorgeschlagen - weil fast alle bekannten "Slow-Hopping"-Funkteile heutzutage weniger als 160 µs Einschwingzeit benötigen - den bisherigen "Double Slot"-Zeitschlitz soweit zu verkürzen, so dass sich zusammen mit der standardisierten 56 Bit Guard Period eine freie Zone von rund 180 µs ergibt, die dann als Einschwingzeit für den direkt anschließenden Zeitschlitz genutzt werden kann. Bei einer Reduzierung des B-Feldes von 800 Bit (Standard-"Double Slot"-Zeitschlitz) auf 640 Bit ergibt sich eine freie Zone von 56 + 160 = 216 Bit (187 µs). Damit lassen sich dann bis zu sechs gleichzeitige Breitband-Sprachverbindungen realisieren.

Für eine gesicherte Datenübertragung wird in einem weiteren Schritt das 640 Bit große B-Feld noch um eine 32 Bit CRC ergänzt, so dass nun 672 Bit im B-Feld übertragen werden. Die freie Zone reduziert dann auf 56 + 128 = 184 Bit (160 µs).

Um mit dem Vorschlag darüber hinaus nicht allein auf diese beiden Paketformate (640 Bit und 672 Bit B-Feld) festgelegt zu sein, sondern auch weitere Formate bzw. Datenraten sinnvoll im DECT-Standard zu verankern, wird gemäß dem Anspruch 3 weiterhin vorgeschlagen, ein neues Paketformat mit variabler Länge zu definieren. Damit können dann auch viele weitere B-Feldlängen für spezielle Anforderungen auf einfache Art abgeleitet werden.

Ein Umstieg vom schmalbandigen G. 726-Codec (32 kbps) auf den breitbandigen G. 722-Codec (64 kbps) bei unveränderter Anzahl der gleichzeitigen Verbindungen ist nun auch mit kostengünstigen "Slow-Hopping"-Funkteile möglich. Es sind keine teuren "Fast-Hopping"-Funkteile mehr erforderlich.

Das Paketformat mit variabler Länge ermöglicht es, die resultierende Datenrate gemäß den Anforderungen der Applikation wesentlich feiner einzustellen, als dies bisher möglich war. Dies führt zu einer besseren Ausnutzung der Funkübertragungsstrecke. Des Weiteren fällt bei hohen Datenraten der beim Mehrzeitschlitz-Verfahren auftretende "Overhead" für Schutzzeiten und Synchronisation weg, wodurch eine weitere Verbesserung der Effizienz bewirkt wird.

Zusätzliche vorteilhafte Weiterbildungen der Erfindung sind in den Unteransprüchen angegeben.

Ein Ausführungsbeispiel der Erfindung wird anhand der FIGUREN 1 bis 5 erläutert.
FIGUR 1 für einen Teilnehmer in zwei Zeitschlitze pro periodisch wiederkehrenden Zeitrahmen übertragene Daten bei einer symmetrischen Verteilung von Sendedatenpaketen zu Empfangsdatenpaketen im Verhältnis 1:1,
FIGUR 2 für einen Teilnehmer in zwei Zeitschlitze pro periodisch wiederkehrenden Zeitrahmen übertragene Daten bei einer asymmetrischen Verteilung von Sendedatenpaketen zu Empfangsdatenpaketen im Verhältnis 3:1,
FIGUR 3 für einen Teilnehmer in zwei Zeitschlitze pro periodisch wiederkehrenden Zeitrahmen übertragene Daten bei einer asymmetrischen Verteilung von Sendedatenpaketen zu Empfangsdatenpaketen im Verhältnis 5:1,
FIGUR 4 für einen Teilnehmer in zwei Zeitschlitze pro periodisch wiederkehrenden Zeitrahmen übertragene Daten bei einer asymmetrischen Verteilung von Sendedatenpaketen zu Empfangsdatenpaketen im Verhältnis 3:2,
FIGUR 5 eine Zeitschlitzstruktur mit der die im Zuge der teilnehmerspezifischen Datenübertragung resultierende Datenrate weitaus flexibler als bisher eingestellt werden kann.

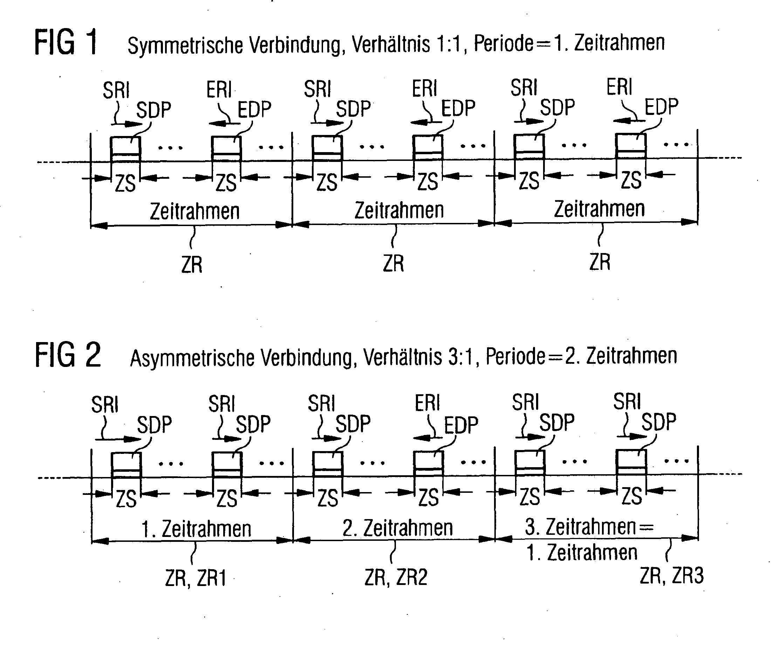

FIGUR 1 zeigt wie über ein Übertragungsmedium, z.B. Luft, gemäß einem auf Zeitschlitzübertragung mit Zeitlagentrennung beruhendem Übertragungsprinzip, z.B. dem TDMA/TDD-Prinzip nach dem DECT-Standard, für einen Teilnehmer, der sich das Übertragungsmedium gegebenenfalls mit weiteren Teilnehmern teilen muss, bei einer symmetrischen Verbindung in zwei zeitlagengetrennten Zeitschlitzen ZS, z.B. einen Downlink-Zeitschlitz und einen Uplink-Zeitschlitz, pro periodisch wiederkehrenden Zeitrahmen ZR Daten übertragen werden, die in Senderichtung SRI als Sendedatenpakete SDP und in Empfangsrichtung ERI als Empfangsdatenpakete EDP über die dargestellten Zeitrahmen ZR hinweg symmetrisch verteilt sind. Symmetrische Verteilung bedeutet dabei, dass die Anzahl der Sendedatenpakete SDP und Empfangsdatenpakete EDP für jeden Zeitrahmen ZR gleich ist, sich also die Datenpakete im Verhältnis 1:1 auf die Zeitrahmen ZR verteilen.

Als Zeitschlitze ZS können die im DECT-Standard definierten "Half Slot"-Zeitschlitze, "Full Slot"-Zeitschlitze und/oder "Double Slot"-Zeitschlitze benutzt werden. Die Zeitschlitze ZS werden dem Zeitrahmen ZR vorzugsweise paarweise zugeordnet, wobei der Abstand für das Zeitschlitzpaar die Länge eines halben Zeitrahmens beträgt. Es ist aber auch möglich dem Zeitrahmen mehr als zwei Zeitschlitze zuzuordnen.

FIGUR 2 zeigt wie über das Übertragungsmedium, z.B. Luft, gemäß dem auf Zeitschlitzübertragung mit Zeitlagentrennung beruhendem Übertragungsprinzip, z.B. dem TDMA/TDD-Prinzip nach dem DECT-Standard, für einen Teilnehmer, der sich das Übertragungsmedium gegebenenfalls wieder mit weiteren Teilnehmern teilen muss, bei einer asymmetrischen Verbindung in zwei zeitlagengetrennten Zeitschlitzen ZS pro periodisch wiederkehrenden Zeitrahmen ZR Daten übertragen werden, die in Senderichtung SRI als Sendedatenpakete SDP und in Empfangsrichtung ERI als Empfangsdatenpakete EDP über die dargestellten Zeitrahmen ZR verteilt sind.

In einem ersten Zeitrahmen ZR1 werden in den beiden Zeitschlitzen ZS zwei Sendedatenpakete SDP übertragen. Die beiden Zeitschlitze ZS sind also z.B. entweder beide Downlink-Zeitschlitze oder beide Uplink-Zeitschlitze. In einem darauf folgenden zweiten Zeitrahmen ZR2 wird in einem Zeitschlitz ZS ein Sendedatenpaket SDP und in dem anderen Zeitschlitz ZS ein Empfangsdatenpaket EDP übertragen. Die beiden Zeitschlitze ZS sind also z.B. ein Downlink-Zeitschlitz und ein Uplink-Zeitschlitz. In einem darauf folgenden dritten Zeitrahmen ZR3 werden wie im ersten Zeitrahmen ZR1 zwei Sendedatenpakete SDP übertragen, so dass sich dadurch eine Periodizität von zwei Zeitrahmen ergibt. In diesen zwei Zeitrahmen verteilen sich die Sendedatenpakete SDP und Empfangsdatenpakete EDP im Verhältnis 3:1, d.h. auf ein Empfangsdatenpaket EDP kommen drei Sendedatenpakete SDP.

Für die Verteilung der Sendedatenpakete SDP und Empfangsdatenpakete EDP wird eine Vielzahl "n" halber Zeitrahmen der Zeitrahmen ZR1, ZR2 in dem Umfang benutzt, wie die dadurch bedingte Verzögerungszeit für die Datenübertragung keinen störenden Einfluss hat.

Als Zeitschlitze ZS können auch die im DECT-Standard definierten "Half Slot"-Zeitschlitze, "Full Slot"-Zeitschlitze und/oder "Double Slot"-Zeitschlitze benutzt werden. Die Zeitschlitze ZS werden dem Zeitrahmen ZR vorzugsweise wieder paarweise zugeordnet, wobei der Abstand für das Zeitschlitzpaar die Länge eines halben Zeitrahmens beträgt.

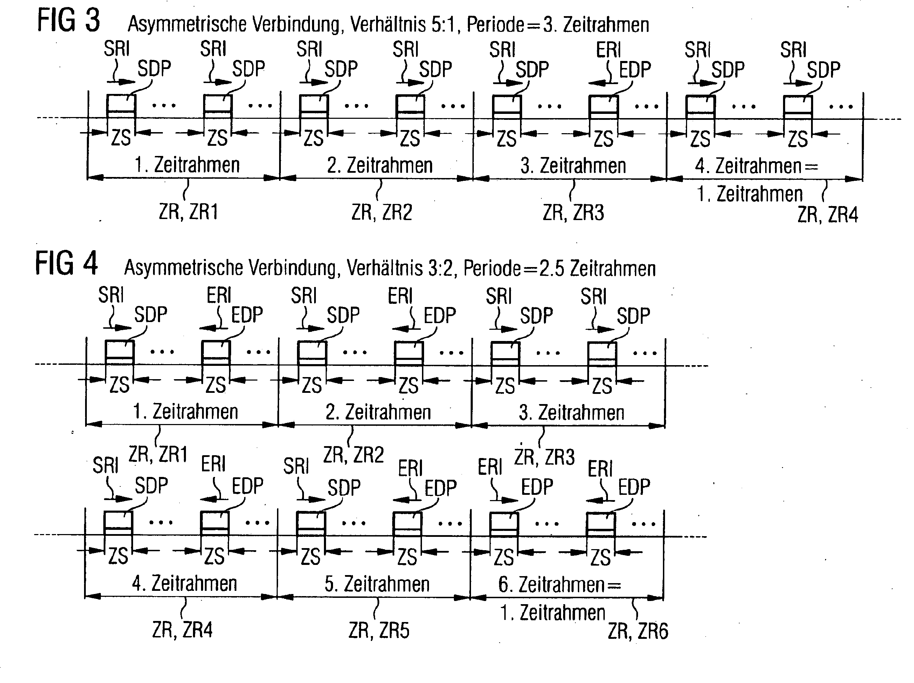

FIGUR 3 zeigt wie über das gleiche Übertragungsmedium wie in der FIGUR 2 gemäß dem auf Zeitschlitzübertragung mit Zeitlagentrennung beruhendem Übertragungsprinzip, z.B. dem TDMA/TDD-Prinzip nach dem DECT-Standard, für einen Teilnehmer, der sich das Übertragungsmedium gegebenenfalls wieder mit weiteren Teilnehmern teilen muss, bei einer asymmetrischen Verbindung in zwei zeitlagengetrennten Zeitschlitzen ZS pro periodisch wiederkehrenden Zeitrahmen ZR Daten übertragen werden, die in Senderichtung SRI als Sendedatenpakete SDP und in Empfangsrichtung ERI als Empfangsdatenpakete EDP über die dargestellten Zeitrahmen ZR verteilt sind.

In zwei aufeinander folgenden Zeitrahmen ZR, einem ersten Zeitrahmen ZR1 und einem zweiten Zeitrahmen ZR2, werden in den jeweils beiden Zeitschlitzen ZS ein Sendedatenpaket SDP übertragen. Die beiden Zeitschlitze ZS sind also jeweils z.B. entweder beide Downlink-Zeitschlitze oder beide Uplink-Zeitschlitze. In einem sich daran anschließenden dritten Zeitrahmen ZR3 wird in einem Zeitschlitz ZS ein Sendedatenpaket SDP und in dem anderen Zeitschlitz ZS ein Empfangsdatenpaket EDP übertragen. Die beiden Zeitschlitze ZS sind also z.B. ein Downlink-Zeitschlitz und ein Uplink-Zeitschlitz. In einem sich daran anschließenden vierten Zeitrahmen ZR4 werden wie im ersten Zeitrahmen ZR1 zwei Sendedatenpakete SDP übertragen, so dass sich dadurch eine Periodizität von drei Zeitrahmen ergibt. In diesen drei Zeitrahmen verteilen sich die Sendedatenpakete SDP und Empfangsdatenpakete EDP im Verhältnis 5:1, d.h. auf ein Empfangsdatenpaket EDP kommen nunmehr fünf Sendedatenpakete SDP.

Für die Verteilung der Sendedatenpakete SDP und Empfangsdatenpakete EDP wird wieder eine Vielzahl "n" halber Zeitrahmen der Zeitrahmen ZR1, ZR2, ZR3 in dem Umfang benutzt, wie die dadurch bedingte Verzögerungszeit für die Datenübertragung keinen störenden Einfluss hat.

Als Zeitschlitze ZS können auch wieder die im DECT-Standard definierten "Half Slot"-Zeitschlitze, "Full Slot"-Zeitschlitze und/oder "Double Slot"-Zeitschlitze benutzt werden. Die Zeitschlitze ZS werden dem Zeitrahmen ZR vorzugsweise wieder paarweise zugeordnet, wobei der Abstand für das Zeitschlitzpaar die Länge eines halben Zeitrahmens beträgt.

FIGUR 4 zeigt wie über das gleiche Übertragungsmedium wie in den FIGUREN 2 und 3 gemäß dem auf Zeitschlitzübertragung mit Zeitlagentrennung beruhendem Übertragungsprinzip, z.B. dem TDMA/TDD-Prinzip nach dem DECT-Standard, für einen Teilnehmer, der sich das Übertragungsmedium gegebenenfalls wieder mit weiteren Teilnehmern teilen muss, bei einer asymmetrischen Verbindung in zwei zeitlagengetrennten Zeitschlitzen ZS pro periodisch wiederkehrenden Zeitrahmen ZR Daten übertragen werden, die in Senderichtung SRI als Sendedatenpakete SDP und in Empfangsrichtung ERI als Empfangsdatenpakete EDP über die dargestellten Zeitrahmen ZR verteilt sind.

In zwei aufeinander folgenden Zeitrahmen ZR, einem ersten Zeitrahmen ZR1 und einem zweiten Zeitrahmen ZR2, werden in jeweils einem Zeitschlitz ZS ein Sendedatenpaket SDP und in dem jeweils anderen Zeitschlitz ZS ein Empfangsdatenpaket EDP übertragen. Die beiden Zeitschlitze ZS sind also jeweils z.B. ein Downlink-Zeitschlitz und ein Uplink-Zeitschlitz. In einem sich daran anschließenden dritten Zeitrahmen ZR3 wird, weil die Zuordnung von Zeitschlitzen ZS zu einem Zeitrahmen vorzugsweise immer paarweise erfolgt und die asymmetrische Verbindung mit möglichst wenigen Änderungen gegenüber der symmetrischen Verbindung in der FIGUR 1 durchgeführt werden soll, in beiden Zeitschlitzen ZS ein Sendedatenpaket SDP übertragen. Die beiden Zeitschlitze ZS sind also z.B. entweder beide Downlink-Zeitschlitze oder beide Uplink-Zeitschlitze. In weiteren zwei aufeinander folgenden Zeitrahmen ZR, einem vierten Zeitrahmen ZR4 und einem fünften Zeitrahmen ZR5, werden wieder in jeweils einem Zeitschlitz ZS ein Sendedatenpaket SDP und in dem jeweils anderen Zeitschlitz ZS ein Empfangsdatenpaket EDP übertragen. Die beiden Zeitschlitze ZS sind also wieder jeweils z.B. ein Downlink-Zeitschlitz und ein Uplink-Zeitschlitz. In einem sich daran anschließenden sechsten Zeitrahmen ZR6 werden wie im ersten Zeitrahmen ZR1 in einem Zeitschlitz ZS ein Sendedatenpaket SDP und in dem anderen Zeitschlitz ZS ein Empfangsdatenpaket EDP übertragen, so dass sich dadurch eine Periodizität von 5:2 = 2,5 Zeitrahmen ergibt. In diesen 2,5 Zeitrahmen verteilen sich die Sendedatenpakete SDP und Empfangsdatenpakete EDP im Verhältnis 3:2, d.h. auf zwei (vier) Empfangsdatenpakete EDP kommen nunmehr drei (sechs) Sendedatenpakete SDP.

Für die Verteilung der Sendedatenpakete SDP und Empfangsdatenpakete EDP wird wieder eine Vielzahl "n" halber Zeitrahmen der Zeitrahmen ZR1, ZR2, ZR3, ZR4, ZR5 in dem Umfang benutzt, wie die dadurch bedingte Verzögerungszeit für die Datenübertragung keinen störenden Einfluss hat.

Als Zeitschlitze ZS können auch wieder die im DECT-Standard definierten "Half Slot"-Zeitschlitze, "Full Slot"-Zeitschlitze und/oder "Double Slot"-Zeitschlitze benutzt werden. Die Zeitschlitze ZS werden dem Zeitrahmen ZR vorzugsweise wieder paarweise zugeordnet, wobei der Abstand für das Zeitschlitzpaar die Länge eines halben Zeitrahmens beträgt.

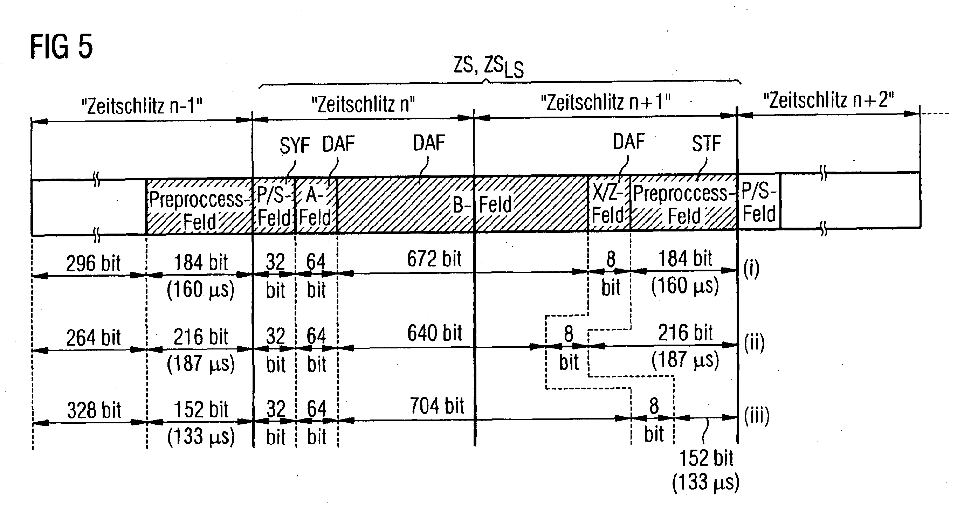

FIGUR 5 zeigt wie im Prinzip aus zwei aufeinander folgenden "Full Slot"-Zeitschlitzen - z.B. gemäß dem DECT-Standard, dem Zeitschlitz n und dem Zeitschlitz n+1, ein verkürzter als "Long Slot"-Zeitschlitz ZS_{LS} bezeichneter "Double Slot"-Zeitschlitz, der auf einen Vorschlag von Höft & Wessel auf der DECT-Konferenz, 11./12. Februar 2003 zurückgeht und der die Bit- und Zeitangaben zu (ii) aufweist, erzeugt wird, dessen Zeitschlitzstruktur ein Synchronisationsfeld SYF, ein Datenfeld DAF und ein Steuerungsfeld STF aufweist und derart veränderbar ist, dass gegenüber einem ungekürzten "Double Slot"-Zeitschlitz des DECT-Standards das Datenfeld DAF zwar verkürzt ist, aber dafür variabel ist und das Steuerungsfeld STF zumindest so lang ist, dass unabhängig davon, wie schnell eine Trägersignalfrequenz für die übertragenen Daten gewechselt werden kann, ein Trägersignalfrequenzwechsel durchgeführt werden kann.

Während gemäß dem DECT-Standard das Synchronisationsfeld SYF aus dem P/S-Feld (Preamble/Synchronisation) und das Steuerungsfeld STF aus einem Preprocess-Feld besteht, das im Wesentlichen aus der "Guard Period" gebildet wird, enthält das Datenfeld DAF das A-Feld, das B-Feld und das X/Z-Feld. Die Größe des Steuerungsfeldes STF ist dabei so bemessen, dass unabhängig davon, wie schnell eine Trägersignalfrequenz für die übertragenen Daten gewechselt werden kann, ein Trägersignalfrequenzwechsel auch sicher durchgeführt werden kann.

Die Variabilität gegenüber dem "Höft & Wessel"-Vorschlag wird in der FIGUR 5 durch die Bit- und Zeitangaben zu (i) und (iii) angedeutet. In beiden Fällen wird das B-Feld des Datenfeldes DAF auf Kosten des Steuerungsfeldes STF vergrößert. In Fall (i) von 640 Bit auf 672 Bit und im Fall (iii) von 640 Bit auf 704 Bit.

Der in der FIGUR 5 dargestellte "Long Slot"-Zeitschlitz ZS_{LS} mit der erläuterten Zeitschlitzstruktur kann zudem als der Zeitschlitz ZS in den FIGUREN 1 bis 4 verwendet werden.

Die vorstehenden Ausführungen zu dem aus einem "Double Slot"-Zeitschlitz verkürzten als "Long Slot"-Zeitschlitz ZS_{LS} bezeichneten "Double Slot"-Zeitschlitz behalten ihre grundsätzliche Gültigkeit (abgesehen von den Bit- und Zeitabgaben) auch für einen aus einem "Full Slot"-Zeitschlitz verkürzten als "Short Slot" bezeichneten "Full Slot"-Zeitschlitz.

## Patentansprüche

1. Verfahren zum Übertragen von teilnehmerspezifischen Daten über ein Übertragungsmedium, gemäß einem auf Zeitschlitzübertragung mit Zeitlagentrennung beruhendem Übertragungsprinzip, bei dem die zeitlagengetrennten Zeitschlitze (ZS) in einen periodisch wiederkehrenden Zeitrahmen (ZR, ZR1...ZR6) zusammengefasst werden und jedem Teilnehmer für die Übertragung der Daten mindestens zwei Zeitschlitze (ZS) pro Zeitrahmen (ZR, ZR1...ZR6) zugeordnet werden, wobei die für den Teilnehmer in Senderichtung (SRI) und Empfangsrichtung (ERI) zu übertragenden und bezüglich dieser Richtungen asymmetrisch verteilten Daten entsprechend dieser Verteilung durch das Verhältnis einer Anzahl von Sendedatenpaketen (SDP) zu Empfangsdatenpaketen (EDP) in einer Vielzahl "n" halber Zeitrahmen der Zeitrahmen (ZR, ZR1...ZR6) mit "n ≥ 2 und n∈N" übertragen werden.
***dadurch gekennzeichnet*, *dass*** die teilnehmerspezifischen Daten in einem DECT-System, insbesondere über eine DECT-Luftschnittstelle übertragen werden und
die Zeitschlitze (ZS) als "Half Slot"-Zeitschlitze, "Full Slot"-Zeitschlitze und/oder "Double Slot"-Zeitschlitze benutzt werden.

2. Verfahren zum Übertragen von teilnehmerspezifischen Daten, insbesondere nach Anspruch 1, ***dadurch gekennzeichnet, dass*** aus einem "Full Slot"-Zeitschlitz ein verkürzter als "Short Slot" bezeichneter "Full Slot"-Zeitschlitz und/oder aus einem "Double Slot"-Zeitschlitz ein verkürzter als "Long Slot"-Zeitschlitz (ZS_{LS}) bezeichneter "Double Slot"-Zeitschlitz erzeugt wird, indem die jeweilige Zeitschlitzstruktur, bestehend aus einem Synchronisationsfeld (SYF), einem Datenfeld (DAF) und einem Steuerungsfeld (STF) so verändert wird, dass gegenüber dem ungekürzten "Full Slot"-Zeitschlitz beziehungsweise dem "Double Slot"-Zeitschlitz das Datenfeld (DAF) zwar verkürzt ist, aber dafür variabel ist und das Steuerungsfeld (STF) zumindest so lang ist, dass unabhängig davon, wie schnell eine Trägersignalfrequenz für die übertragenen Daten gewechselt werden kann, ein Trägersignalfrequenzwechsel durchgeführt werden kann.

3. Verfahren zum Übertragen von teilnehmerspezifischen Daten nach Anspruch 1 oder 2, ***dadurch gekennzeichnet, dass*** die Vielzahl "n" halber Zeitrahmen der Zeitrahmen (ZR, ZR1....ZR6)) in dem Umfang für die Verteilung der Sendedatenpakete (SDP) und Empfangsdatenpakete (EDP) benutzt wird, wie die dadurch bedingte Verzögerungszeit für die Datenübertragung keinen störenden Einfluss hat.

4. Verfahren zum Übertragen von teilnehmerspezifischen Daten nach Anspruch 1 oder 2, ***dadurch gekennzeichnet, dass*** Luft als das Übertragungsmedium benutzt wird.

5. Verfahren zum Übertragen von teilnehmerspezifischen Daten nach Anspruch 4, ***dadurch gekennzeichnet, dass*** für die Datenübertragung über die Luft eine DECT-Luftschnittstelle benutzt wird.

6. Verfahren zum Übertragen von teilnehmerspezifischen Daten nach Anspruch 5, ***dadurch gekennzeichnet, dass*** die Zeitschlitze (ZS) dem Zeitrahmen (ZR, ZR1...ZR6) paarweise zugeordnet werden, wobei der Abstand für das Zeitschlitzpaar die Länge einen halben Zeitrahmens beträgt.

7. Verfahren zum Übertragen von teilnehmerspezifischen Daten nach Anspruch 1, 2 und 5, ***dadurch gekennzeichnet, dass*** dem "Half Slot"-Zeitschlitz 152 Bit im Datenfeld (DAF), dem verkürzten "Full Slot"-Zeitschlitz 264 Bit im Datenfeld (DAF) dem "Full Slot"-Zeitschlitz 392 Bit im Datenfeld (DAF), dem verkürzten "Double Slot"-Zeitschlitz (ZS_{LS}) 744 Bit im Datenfeld (DAF) und dem "Double Slot"-Zeitschlitz 872 Bit im Datenfeld (DAF) zugewiesen werden.

## Claims

1. Method for transmitting subscriber-specific data using a transmission medium, on a basis of a transmission principle that involves timeslot transmission with time division duplexing, in which the time division duplexed timeslots (ZS) are combined into a periodically recurring time frame (ZR, ZR1...ZR6) and each subscriber is allocated at least two timeslots (ZS) per time frame (ZR, ZR1...ZR6) for the transmission of the data, wherein the data that are to be transmitted for the subscriber in the transmission direction (SRI) and the reception direction (ERI) and that are distributed asymmetrically with respect to these directions are transmitted according to this distribution by the ratio of a number of transmission data packets (SDP) to receive data packets (EDP) in a multiplicity "n" of half time frames from the time frames (ZR, ZR1...ZR6) with "n ≥ 2 and n∈N",
**characterized in that** the subscriber-specific data are transmitted in a DECT system, particularly via a DECT air interface, and
the time slots (ZS) are used as "half slot" time slots, "full slot" time slots and/or "double slot" time slots.

2. Method for transmitting subscriber-specific data, particularly according to Claim, **characterized in that** a shortened "full slot" time slot, called a "short slot", is produced from a "full slot" time slot and/or a shortened "double slot" time slot, called a "long slot" time slot (ZS_{LS}), is produced from a "double slot" time slot by altering the respective time slot structure, comprising a synchronization field (SYF), a data field (DAF) and a control field (STF), such that although the data field (DAF) is shortened in comparison with the unshortened "full slot" time slot or the "double slot" time slot it is variable instead and the control field (STF) is at least long enough for a carrier signal frequency change to be able to be performed irrespective of how quickly a carrier signal frequency for the transmitted data can be changed.

3. Method for transmitting subscriber-specific data according to Claim 1 or 2, **characterized in that** the multiplicity "n" of half time frames from the time frames (ZR, ZR1...ZR6) is used for distributing the transmission data packets (SDP) and received data packets (EDP) in so far as the resultant delay time for the data transmission does not have a disturbing influence.

4. Method for transmitting subscriber-specific data according to Claim 1 or 2, **characterized in that** air is used as the transmission medium.

5. Method for transmitting subscriber-specific data according to Claim 4, **characterized in that** a DECT air interface is used for the data transmission via the air.

6. Method for transmitting subscriber-specific data according to Claim 5, **characterized in that** the time slots (ZS) are allocated to the time frame (ZR, ZR1...ZR6) in pairs, wherein the interval for the pair of time slots is the length of half a time frame.

7. Method for transmitting subscriber-specific data according to Claims 1, 2 and 5, **characterized in that**
the "half slot" time slot is assigned 152 bits in the data field (DAF), the shortened "full slot" time slot is assigned 264 bits in the data field (DAF), the "full slot" time slot is assigned 392 bits in the data field (DAF), the shortened "double slot" time slot (ZS_{LS}) is assigned 744 bits in the data field (DAF) and the "double slot" time slot is assigned 872 bits in the data field (DAF).

## Revendications

1. Procédé de transmission de données spécifiques à un abonné par l'intermédiaire d'un support de transmission conformément à un principe basé sur la transmission de créneaux temporels à positions temporelles séparées, dans lequel les créneaux temporels à positions temporelles séparées (ZS) sont regroupés en une trame temporelle périodique récurrente (ZR, ZR1... ZR6) et au moins deux créneaux temporels (ZS) par trame temporelle (ZR, ZR1... ZR6) sont associés à chaque abonné pour la transmission des données, dans lequel les données destinées à l'abonné et devant être transmises dans la direction d'émission (SRI) et dans la direction de réception (ERI) et réparties de manière asymétrique par rapport à ces directions sont transmises d'une manière qui correspond à cette répartition conformément au rapport d'un nombre de paquets de données d'émission (SDP) au nombre de paquets de données de réception (EDP) dans une pluralité "n" de demi-trames temporelles des trames temporelles (ZR, ZR1... ZR6), avec "n ≥ 2 et n ∈ N", **caractérisé en ce que** les données spécifiques à l'abonné sont transmises dans un système DECT, notamment par l'intermédiaire d'une interface radio DECT et les créneaux temporels (ZS) sont utilisés en tant que créneaux temporels "half slot" (demi-créneau), que créneaux temporels "full slot" (créneau entier) et/ou que créneaux temporels "double slot" (double créneau).

2. Procédé de transmission de données spécifiques à un abonné, notamment selon la revendication 1, **caractérisé en ce qu'**à partir d'un créneau temporel "full slot", un créneau temporel "full slot" raccourci est généré et est désigné "short slot" (créneau court) et/ou **en ce qu'**à partir d'un créneau temporel "double slot", un créneau temporel "double slot" raccourci est généré et est désigné créneau temporel "long slot" (créneau long) (ZL_{LS}), en faisant en sorte que la structure des créneaux temporels respectifs, constituée d'un champ de synchronisation (SYF), d'un champ de données (DAF) et d'un champ de commande (STF), soit modifiée de manière à ce que, par rapport au créneau temporel "full slot" non raccourci ou au créneau temporel "double slot", le champ de données (DAF) soit effectivement raccourci mais qu'à cet effet il soit variable et que le champ de commande (STF) soit au moins suffisamment long pour qu'une modification de fréquence du signal porteur puisse être effectuée indépendamment de la vitesse à laquelle une fréquence du signal porteur destinée aux données transmises peut être modifiée.

3. Procédé de transmission de données spécifiques à un abonné selon la revendication 1 ou 2, **caractérisé en ce que** la pluralité "n" de demi-trames temporelles des trames temporelles (ZR, ZR1... ZR6) est utilisée pour la répartition des paquets de données d'émission (SDP) et des paquets de données de réception (EDP) dans la mesure où le temps de retard ainsi occasionné n'a aucune influence perturbatrice sur la transmission de données.

4. Procédé de transmission de données spécifiques à un abonné selon la revendication 1 ou 2, **caractérisé en ce que** le support de transmission utilisé est un support radio.

5. Procédé de transmission de données spécifiques à un abonné selon la revendication 4, **caractérisé en ce qu'**on utilise une interface radio DECT pour la transmission de données par l'intermédiaire du support radio.

6. Procédé de transmission de données spécifiques à un abonné selon la revendication 5, **caractérisé en ce que** les créneaux temporels (ZS) sont associés par paires aux trames temporelles (ZR, ZR1... ZR6), l'espacement utilisé pour la paire de créneaux temporels couvrant la longueur d'une demi-trame temporelle.

7. Procédé de transmission de données spécifiques à un abonné selon les revendications 1, 2 et 5, **caractérisé en ce que** 152 bits du champ de données (DAF) sont alloués au créneau temporel "half slot", 264 bits du champ de données (DAF) sont alloués au créneau temporel "full slot" raccourci, 392 bits du champ de données (DAF) sont alloués au créneau temporel "full slot", 744 bits du champ de données (DAF) sont alloués au créneau temporel "double slot" raccourci (ZS_{LS}), et 872 bits du champ de données (DAF) sont alloués au créneau temporel "double slot".
